# EUROPÄISCHE PATENTSCHRIFT

(11) **EP 3 994 479 B1**
(45) Veröffentlichungstag und Bekanntmachung des Hinweises auf die Patenterteilung: **01.03.2023**
(21) Anmeldenummer: 20731044.2
(22) Anmeldetag: 04.06.2020
(51) Int. Cl.: G01S 7/02, G01S 7/35, G01S 13/32, G01S 13/58

(54) **OFDM-RADARSENSOR MIT MEHREREN SENDEKANÄLEN UND FORTSCHREITENDER BERECHNUNG VON ZEITSIGNALEN**
OFDM RADAR SENSOR WITH MULTIPLE TRANSMISSION CHANNELS AND CONTINUOUS CALCULATION OF TIME SIGNALS
CAPTEUR RADAR OFDM COMPRENANT PLUSIEURS CANAUX ÉMETTEURS ET CALCUL PROGRESSIF DE SIGNAUX TEMPORELS

(30) Priorität: 06.07.2019 DE 102019209968
(43) Veröffentlichungstag der Anmeldung: 11.05.2022
(73) Patentinhaber: Robert Bosch GmbH, 70442 Stuttgart (DE)
(72) Erfinder: SCHINDLER, Daniel, 71636 Ludwigsburg (DE); HASCH, Juergen, 70195 Stuttgart (DE); KORN, Robert, 76227 Karlsruhe (DE)
(86) Internationale Anmeldenummer: PCT/EP2020/065470
(87) Internationale Veröffentlichungsnummer: WO 2021/004702

(56) Entgegenhaltungen:
- DE-A1-102015 202 874
- US-A1- 2016 356 885
- WIESBECK WERNER ET AL: "Radar 2020: The future of radar systems", 2015 IEEE INTERNATIONAL GEOSCIENCE AND REMOTE SENSING SYMPOSIUM (IGARSS), IEEE, 26. Juli 2015 (2015-07-26), Seiten 188-191, XP032805987, DOI: 10.1109/IGARSS.2015.7325731 [gefunden am 2015-11-10]

## Beschreibung

Die Erfindung betrifft einen OFDM-Radarsensor mit mehreren Sendekanälen und mit wenigstens einem Empfangskanal. Weiter betrifft die Erfindung ein Verfahren zum Betreiben eines solchen OFDM-Radarsensors.

### Stand der Technik

Ein OFDM-(orthogonal frequency division multiplex)-Verfahren ist ein digitales Modulationsverfahren mit mehreren Trägerfrequenzen. Zukünftig werden OFDM-Verfahren für Radarsysteme an Bedeutung gewinnen. Bei einem OFDM-Verfahren wird ein Frequenzband in mehrere orthogonale Unterbänder jeweiliger Unterträger oder sub-carriers aufgeteilt, und es werden OFDM-Symbole sequentiell nacheinander gesendet. Das gesendete Signal eines OFDM-Symbols ist zusammengesetzt aus gemäß einem Modulationsschema des Symbols modulierten, zueinander orthogonalen Unterträger-Signalen (subcarrier signals), die gleichzeitig innerhalb der OFDM-Symbol-Periode gesendet werden. Dazu werden die Unterträgerfrequenzen so gewählt, dass im Frequenzspektrum das Maximum eines Unterträgers auf einem Nulldurchgang der anderen Unterträger liegt.

Beim empfangenen Signal kann anhand der Laufzeit der OFDM-Symbole eine Entfernung eines Radarobjekts geschätzt werden, während anhand eines aus dem Doppler-Effekt resultierenden Phasenverlaufs über eine Folge von OFDM-Symbolen eine Geschwindigkeitsschätzung vorgenommen werden kann. Mehrere Radarobjekte verursachen eine Summe von verzögerten und dopplerverschobenen Echos des gesendeten OFDM-Signals. Durch einen Zyklusvorspann (Prefix) vor der Symbol-Periode können sich überlagernde Radarechos mit unterschiedlichen Laufzeiten von Radarechos eines nachfolgenden OFDM-Symbols getrennt werden.

US 2016/0356885 A1 und DE 10 2015 210 454 A1 beschreiben ein Verfahren zum Betreiben einer Radarvorrichtung mit wenigstens zwei Sendeantennen, bei dem OFDM-Unterträger nicht-überlappend und im wesentlichen nicht-äquidistant auf Sendespektren aufgeteilt werden, welche gleichzeitig von den Sendeantennen gesendet werden, wobei jedes Sendespektrum wenigstens zwei direkt benachbarte OFDM-Unterträger aufweist. Die Sendespektren werden durch komplexe Modulation von zueinander äquidistanten orthogonalen OFDM-Unterträgern erzeugt. Aus einem Empfangssignal wird ein Empfangsspektrum pro Sendespektrum erzeugt, wobei ein Aufteilen der OFDM-Unterträger entsprechend ihrer Aufteilung in den Sendespektren durchgeführt wird. Aus den Empfangsspektren werden die gesendeten Signalformen der Sendespektren eliminiert, und es wird pro Empfangsspektrum ein Radarbild erzeugt, wobei die Radarbilder in einer Abstandsdimension und in einer Geschwindigkeitsdimension ausgewertet werden. In einem Beispiel werden 256 äquidistante Frequenzlinien entsprechend den OFDM-Unterträgern auf zwei nicht-äquidistante Teilspektren pseudo-zufällig aufgeteilt.

"Stepped-Carrier OFDM-Radar Processing Scheme to Retrieve High-Resolution Range-Velocity Profile at Low Sampling Rate", B. Schweizer, C. Knill, D. Schindler, C. Waldschmidt, IEEE TRANSACTIONS ON MICROWAVE THEORY AND TECHNIQUES, VOL. 66, NO. 3, MARCH 2018, pp. 1610-1618, beschreibt ein Verarbeitungsverfahren für Stepped-OFDM-Radarsignale. Jedes OFDM-Symbol wird in Subsymbole aufgeteilt, die mit jeweils um einen Schritt erhöhter Trägerfrequenz gesendet werden, um die Basisband-Bandbreite zu verringern. Eine aufgrund der schrittweise gesendeten Subsymbole erforderliche Phasenkorrektur der empfangenen Signale wird in eine modifizierte DFT (Digital Fourier Transformation) integriert.

### Offenbarung der Erfindung

Aufgabe der Erfindung ist es, einen OFDM-Radarsensor und ein Verfahren zum Betrieb eines solchen zu schaffen, bei dem der Speicher- und/oder Rechenaufwand für die Erzeugung der Signale mehrerer Sendekanäle verringert ist oder die Anzahl der Sendekanäle erhöht werden kann, ohne den Speicheraufwand in gleichem Maße zu steigern.

Bei einem herkömmlichen OFDM-Radarverfahren werden die jeweiligen Zeitsignale der einzelnen Sendekanäle durch inverse Fouriertransformation, insbesondere IFFT (Inverse Fast Fourier Transformation), aus dem mit komplexen Amplituden modulierten OFDM-Unterträgern eines jeweiligen OFDM-Symbols erzeugt. Der für die Zeitsignale erforderliche Speicher steigt somit mit der Anzahl der Sendekanäle.

Die Aufgabe wird erfindungsgemäß gelöst durch einen OFDM-Radarsensor mit mehreren Sendekanälen und mit wenigstens einem Empfangskanal, mit einer Steuer- und Auswerteeinrichtung, die für eine Betriebsweise ausgelegt ist, bei der die mehreren Sendekanäle jeweilige Signale senden, wobei ein Signal eines jeweiligen Sendekanals eine Folge von OFDM-Symbolen umfasst und wobei die Signale der mehreren Sendekanäle gleichzeitig gesendet werden,
wobei die auf einem jeweiligen Sendekanal gesendeten OFDM-Symbole jeweils OFDM-Unterträger aufweisen, die orthogonal sind zu den OFDM-Unterträgern der gleichzeitig auf den anderen der mehreren Sendekanäle gesendeten OFDM-Symbole,
wobei für ein von dem wenigstens einen Empfangskanal empfangenen Empfangssignal eine spektrale Trennung von Signalanteilen des Empfangssignals erfolgt, wobei eine Aufteilung von OFDM-Unterträgern auf die Signalanteile entsprechend ihrer Aufteilung auf die Sendekanäle in den gleichzeitig auf den Sendekanälen gesendeten OFDM-Symbolen erfolgt und eine Auswertung der Signalanteile erfolgt,
wobei der OFDM-Radarsensor wenigstens für erste Sendekanäle der mehreren Sendekanäle je erstem Sendekanal mehrere Zwischenspeicher für Teile einer Signalform des zu sendenden Signals des Sendekanals aufweist,
wobei bei der genannten Betriebsweise wenigstens für die ersten Sendekanäle je Sendekanal die Signalform des zu sendenden Signals, welche die betreffende Folge von OFDM-Symbolen umfasst, fortschreitend in Teilen berechnet wird, wobei die mehreren Zwischenspeicher umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform berechnet und in einem der Zwischenspeicher abgelegt wird, während ein vorhergehender Teil der Signalform bereits aus einem anderen der Zwischenspeicher ausgelesen und digital-analog-gewandelt wird und auf dem betreffenden Sendekanal gesendet wird.

Auf diese Weise können für die jeweiligen Sendekanäle Symbole verwendet werden, deren Unterträger orthogonal zu denen der Symbole der anderen Sendekanäle sind, während zumindest für die ersten Sendekanäle lediglich Zwischenspeicher für Teile der Signalform der gesamten Folge von OFDM-Symbolen benötigt werden. Die Anzahl der ersten Sendekanäle ist mindestens 1 (eins). Die Anzahl der ersten Sendekanäle kann beispielsweise geringer als die Anzahl der Sendekanäle sein.

Unter einer Signalform ist ein Zeitsignal zu verstehen, also eine Signalform, die den zeitlichen Verlauf eines Signals oder eines Teils davon, z.B. eines OFDM-Symbols, wiedergibt. Unter dem fortschreitenden Berechnen der Signalform des zu sendenden Signals ist zu verstehen, dass fortschreitend nacheinander (Stück für Stück) Teile des Zeitsignals, also der Signalform, die den zeitlichen Verlauf des Signals wiedergibt, erzeugt werden. Jeder Teil umfasst vorzugsweise eines oder mehrere der OFDM-Symbole der Folge von OFDM-Symbolen des Signals des Sendekanals. Jeder Zwischenspeicher hat vorzugweise eine Größe entsprechend einem Teil, bevorzugt eine Größe entsprechend einem oder zwei OFDM-Symbolen.

Es wird somit für das fortschreitende Ablegen und Auslesen für das digital-analog-Wandeln der Teile der Signalform des Sendesignals ein jeweiliger Zwischenspeicher wiederholt zum Ablegen und zum Auslesen für das digital-analog-Wandeln verwendet. Beispielsweise können zwei Zwischenspeicher abwechselnd verwendet werden, oder es können mehr als zwei Zwischenspeicher umlaufend verwendet werden.

Indem die Berechnung fortschreitend in Teilen erfolgt, ist es nicht nötig, für die gesamte Folge von OFDM-Symbolen eines ersten Sendekanals den entsprechenden Speicher für die gesamte Signalform bereitzustellen. Die Anzahl der ersten Sendekanäle kann somit erhöht werden, ohne dass der benötigte Speicher dabei stark anwächst. Die Verwendung von wenigstens zwei Zwischenspeichern je Sendekanal ermöglicht es, dass ein Digital-Analog-Wandler auf einen Zwischenspeicher zum Auslesen und unmittelbaren Wandeln in ein analoges Signal zugreifen kann, während ein anderer Zwischenspeicher für den nahtlos anschließenden nächsten Teil des Signals beschrieben werden kann. Bei den mehreren Zwischenspeichern kann es sich um jeweilige Speicherbereiche eines Speichers handeln.

Unter einem von der Signalform umfassten OFDM-Symbol wird somit insbesondere eine Signalform eines Zeitabschnitts der Folge von OFDM-Symbolen verstanden, welche Signalform ein in den Zeitbereich transformiertes Symbolspektrum des OFDM-Symbols umfasst. Das Symbolspektrum ist durch die belegten OFDM-Unterträger und deren jeweilige komplexe Phasen definiert. Für ein jeweiliges OFDM-Symbol kann ein entsprechender Signalabschnitt des Signals beispielsweise basierend auf Phasencodes des OFDM-Symbols berechnet werden. Dabei wird ein jeweiliges Symbolspektrum durch komplexe Modulation mit komplexen Phasencodes von zueinander orthogonalen OFDM-Unterträgern erzeugt. Das jeweilige Symbolspektrum wird in den Zeitbereich transformiert, beispielsweise mittels IFFT, wodurch ein entsprechender Abschnitt der Signalform erhalten wird. Der jeweilige Teil der Signalform umfasst somit einen oder mehrere dieser Abschnitte, welche jeweils einem OFDM-Symbol entsprechen.

Das digital-analog-Wandeln durch einen DA-Wandler (digital-analog-Wandler) kann direkt aus dem auszulesenden Zwischenspeicher erfolgen. Alternativ kann ein DA-Wandler einen eigenen Pufferspeicher aufweisen, der aus dem auszulesenden Zwischenspeicher befüllt wird.

Zum Senden eines Signals eines jeweiligen Sendekanals erfolgt ein hochfrequentes Modulieren des digital-analog-gewandelten Signals, insbesondere mit einer Radarfrequenz eines lokalen Oszillators. Das Senden des HF-modulierten Signals erfolgt über eine jeweilige Sendeantenne des Sendekanals.

In einem Empfangskanal wird ein empfangenes Empfangssignal demoduliert und digitalisiert, also analog-digital-gewandelt. Aufgrund des beschriebenen Aufbaus der Sendesignale der jeweiligen Sendekanäle, bei dem die OFDM-Unterträger der gleichzeitig gesendeten OFDM-Symbole auf die Sendekanäle aufgeteilt sind, kann in einem von einem Radarobjekt reflektierten, empfangenen Signal für jede OFDM-Unterträgerfrequenz eine Zuordnung zu dem betreffenden Sendekanal erfolgen, von welchem sie stammt. Es erfolgt dementsprechend eine spektrale Trennung von Signalanteilen des Empfangssignals, wobei eine Aufteilung der OFDM-Unterträger auf die Signalanteile entsprechend ihrer Aufteilung auf die Sendekanäle in den gesendeten Signalen erfolgt.

Für jeden der Signalanteile erfolgt ein Eliminieren des entsprechenden gesendeten OFDM-Symbols, insbesondere durch eine komplexe spektrale Division des empfangenen Signalanteils durch das gesendete OFDM-Symbol. Dies kann auch als Normierung des empfangenen Signalanteils bezeichnet werden. Die durch Eliminieren der gesendeten OFDM-Symbole erhaltene Kanalinformation umfasst dann Information über die Laufzeit und eine etwaige Phasenverschiebung des Signals und kann weiter ausgewertet werden zum Erhalten von Abstandsinformation und Geschwindigkeitsinformation sowie Winkelinformation.

Bevorzugte Ausführungsformen und Weiterbildungen der Erfindung ergeben sich aus den Unteransprüchen.

Gemäß einer ersten Weiterbildung der Erfindung weist der OFDM-Radarsensor für jeden der mehreren Sendekanäle je Sendekanal mehrere Zwischenspeicher für Teile einer Signalform des zu sendenden Signals des Sendekanals auf,
wobei bei der genannten Betriebsweise für jeden der mehreren Sendekanäle die Signalform des zu sendenden Signals, welche die betreffende Folge von OFDM-Symbolen umfasst, fortschreitend in Teilen berechnet wird, wobei die mehreren Zwischenspeicher umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform basierend auf Phasencodes berechnet wird, welche durch ein jeweiliges OFDM-Symbol der Folge von OFDM-Symbolen des Signals jeweiligen OFDM-Unterträgern zugeordnet sind,
wobei ein jeweiliger Teil der Signalform berechnet und in einem der Zwischenspeicher abgelegt wird, während ein vorhergehender Teil der Signalform bereits aus einem anderen der Zwischenspeicher ausgelesen und digital-analog-gewandelt wird und auf dem betreffenden Sendekanal gesendet wird.

Auf diese Weise können die Zeitsignale der Sendekanäle vollständig "live" berechnet werden, so dass der Speicherbedarf minimiert wird.

Gemäß einer anderen Weiterbildung der Erfindung ist die Steuer- und Auswerteeinrichtung dazu ausgelegt, bei der genannten Betriebsweise für die ersten Sendekanäle den jeweiligen Teil der Signalform des zu sendenden Signals des Sendekanals aus einem entsprechenden Teil einer Signalform eines generischen Signals oder aus einem entsprechenden Teil einer Signalform eines zu sendenden Signals eines zweiten Sendekanals von wenigstens einem zweiten Sendekanal der mehreren Sendekanäle zu berechnen mittels Multiplikation mit einer periodischen Schwingung mit einer Frequenz, die einem n-fachen eines OFDM-Unterträgerabstands entspricht, wobei n eine ganze Zahl ungleich Null ist, und wobei für unterschiedliche erste Sendekanäle unterschiedliche n verwendet werden. Der (minimale) OFDM-Unterträgerabstand ist durch das verwendete OFDM-Schema vorgegeben.

Auf diese Weise können die jeweils zu berechnenden Teile der Signalformen der ersten Sendekanäle auf besonders einfache und effiziente Weise aus einem entsprechenden Teil einer Signalform eines zweiten Sendekanals oder aus einem Teil einer Signalform eines generischen Signals, insbesondere aus einer generischen Signalform, berechnet werden. Dabei wird in vorteilhafter Weise ausgenutzt, dass die Wahl der Phasencodes der OFDM-Symbole der jeweiligen Sendekanäle frei gewählt werden kann. Mit anderen Worten können die auf die OFDM-Unterträgern aufmodulierten Phasencodes beliebig gewählt werden. Wenn somit ein Teil einer Signalform eines ersten Sendekanals durch Multiplikation mit der genannten periodischen Schwingung aus einem entsprechenden Teil einer Signalform eines zweiten Sendekanals oder des generischen Signals berechnet wird, ist durch eine geeignete Wahl der Frequenz der Schwingung, d.h. durch geeignete Wahl von n, sichergestellt, dass die so berechneten OFDM-Symbole eines ersten Sendekanals zu den gleichzeitig gesendeten OFDM-Symbolen des zweiten Sendekanals bzw. der anderen ersten Sendekanäle orthogonal sind in dem Sinne, dass ihre jeweiligen Unterträger zu den Unterträgern der anderen OFDM-Symbole, die gleichzeitig gesendet werden, orthogonal sind.

Die Durchführung einer einfachen Multiplikation mit der periodischen Schwingung bedeutet eine erhebliche Einsparung des Rechenaufwands gegenüber einer individuellen Berechnung einer Signalform durch komplexe Modulation der OFDM-Unterträger und Transformieren in den Zeitbereich. Durch das fortschreitende Berechnen in Teilen wird zudem Speicher in großem Umfang eingespart. Es wird somit je erstem Sendekanal für die Berechnung eines Teils der Signalform ein entsprechender Teil der Signalform eines zweiten Sendekanals bzw. des generischen Signals aus einem Speicher ausgelesen, beispielsweise aus einem entsprechenden Zwischenspeicher für den Teil der Signalform des Signals des zweiten Sendekanals; der ausgelesene Teil wird im Zeitbereich mit der genannten periodischen Schwingung multipliziert und in dem entsprechenden Zwischenspeicher als berechneter Teil der Signalform des Signals des betreffenden ersten Sendekanals abgelegt.

Vorzugsweise ist die periodische Schwingung, mit der multipliziert wird, eine harmonische Schwingung. Unter einer harmonischen Schwingung ist dabei eine reelle, sinusförmige Schwingung (umfassend eine Linearkombination aus einem Sinus und einem Kosinus mit jeweiligen Amplituden) oder eine komplex-wertige Schwingung mit sinusförmigem Realteil und sinusförmigem Imaginärteil zu verstehen (beispielsweise entsprechend der Schreibweise Z exp (iωt), wobei Z eine komplexe Amplitude ist und ω die Kreisfrequenz ist mit ω = 2πf).

Gemäß einer Ausführungsform weist der OFDM-Radarsensor einen Speicher auf, in welchem wenigstens eine Signalform wenigstens eines OFDM-Symbols gespeichert ist,
wobei bei der genannten Betriebsweise für den wenigstens einen zweiten Sendekanal der mehreren Sendekanäle die Signalform des Signals eines jeweiligen zweiten Sendekanals mehrere Teile umfasst, die jeweils wenigstens ein OFDM-Symbol umfassen, und
wobei die Teile bereitgestellt werden und digital-analog-gewandelt und auf dem betreffenden zweiten Sendekanal gesendet werden,
wobei zum Bereitstellen eines jeden Teils der genannten Teile der Signalform des Signals des betreffenden zweiten Sendekanals auf die wenigstens eine in dem Speicher gespeicherte Signalform zugegriffen wird. Dabei werden die genannten Teile der Signalfolge bereitgestellt zum digital-analog-Wandeln und Senden.

Dabei wird vorzugsweise für die ersten Sendekanäle der jeweilige Teil der Signalform des zu sendenden Signals des jeweiligen Sendekanals aus einem entsprechenden Teil der Signalform eines zu sendenden Signals eines zweiten Sendekanals von wenigstens einem zweiten Sendekanal der mehreren Sendekanäle berechnet mittels der Multiplikation mit einer periodischen Schwingung mit einer Frequenz, die einem n-fachen eines OFDM-Unterträgerabstands entspricht, wobei n eine ganze Zahl ungleich Null ist, und wobei für unterschiedliche erste Sendekanäle unterschiedliche n verwendet werden.

Auf diese Weise ist lediglich für den oder die zweiten Sendekanäle Speicher für Signalformen der in der Folge von OFDM-Symbolen verwendeten OFDM-Symbole erforderlich, oder für die Signalform entsprechend der vollständigen Folge von OFDM-Symbolen. Auf diese Weise kann die benötigte Rechenleistung minimiert werden, während dennoch durch das Berechnen der Teile der Sendesignale der ersten Sendekanäle aus entsprechenden Teilen des Sendesignals eines zweiten Sendekanals der Speicherbedarf für die ersten Sendekanäle minimiert werden kann. Beispielsweise wird während des digital-analog-Wandelns und Sendens aller Teile der Signalform des betreffenden zweiten Sendekanals die wenigstens eine in dem Speicher gespeicherte Signalform des OFDM-Symbols im Speicher beibehalten.

Beispielsweise kann die Signalform des Signals des zweiten Sendekanals, umfassend die Folge von OFDM-Symbolen, vollständig in dem Speicher gespeichert sein. Die Signalform des Signals des zweiten Sendekanals kann jedoch auch aus der in dem Speicher gespeicherten wenigstens einen Signalform eines OFDM-Symbol zusammengestellt werden. Somit braucht der Speicherinhalt während des Bereitstellens und Sendens der Signalform des Signals des zweiten Sendekanals nicht geändert werden.

Bei dem Speicher kann es sich beispielsweise um einen Festspeicher handeln. Alternativ kann bei der genannten Betriebsweise beispielsweise eine Signalform des gesamten Signals eines zweiten Sendekanals berechnet werden und in dem Speicher abgelegt werden, wobei die Signalform zu jeweiligen OFDM-Symbolen basierend auf Phasencodes berechnet wird, welche durch das jeweilige OFDM-Symbol jeweiligen OFDM-Unterträgern zugeordnet sind.

Gemäß einer Ausführungsform weist der OFDM-Radarsensor für wenigstens einen zweiten Sendekanal der mehreren Sendekanäle je zweitem Sendekanal mehrere Zwischenspeicher für Teile einer Signalform des zu sendenden Signals des Sendekanals auf,
wobei bei der genannten Betriebsweise für den wenigstens einen zweiten Sendekanal je Sendekanal die Signalform des zu sendenden Signals, welche die betreffende Folge von OFDM-Symbolen umfasst, fortschreitend in Teilen berechnet wird, wobei die mehreren Zwischenspeicher umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform berechnet und in einem der Zwischenspeicher abgelegt wird, während ein vorhergehender Teil der Signalform bereits aus einem anderen der Zwischenspeicher ausgelesen und digital-analog-gewandelt wird und auf dem betreffenden Sendekanal gesendet wird,
wobei ein jeweiliger Teil der Signalform basierend auf Phasencodes berechnet wird, welche durch ein jeweiliges OFDM-Symbol der Folge von OFDM-Symbolen des Signals jeweiligen OFDM-Unterträgern zugeordnet sind.

Dabei wird vorzugsweise für die ersten Sendekanäle der jeweilige Teil der Signalform des zu sendenden Signals des jeweiligen Sendekanals aus einem entsprechenden Teil der Signalform eines zu sendenden Signals eines zweiten Sendekanals von wenigstens einem zweiten Sendekanal der mehreren Sendekanäle berechnet mittels der Multiplikation mit einer periodischen Schwingung mit einer Frequenz, die einem n-fachen eines OFDM-Unterträgerabstands entspricht, wobei n eine ganze Zahl ungleich Null ist, und wobei für unterschiedliche erste Sendekanäle unterschiedliche n verwendet werden.

Auf diese Weise ist auch für den oder die zweiten Sendekanäle Speicher für das Zeitsignal lediglich in Form der Zwischenspeicher erforderlich. Es kann aus dem jeweiligen Teil der Signalform des zweiten Sendekanals durch Multiplikation mit der genannten periodischen Schwingung ein entsprechender Teil der Signalform des betreffenden ersten Sendekanals erzeugt werden.

Gemäß einer oder mehreren Ausführungsformen ist vorzugsweise die Steuer- und Auswerteeinrichtung dazu ausgelegt, bei der genannten Betriebsweise Amplitudenwerte der jeweiligen periodischen Schwingung zu bestimmen durch Auslesen der Amplitudenwerte aus einer Tabelle gemäß einem Tabellenindex, der in Abhängigkeit eines Phasenwinkels bestimmt wird, welcher für zeitlich nachfolgende Amplitudenwerte der Schwingung inkrementiert wird, wobei für Schwingungen unterschiedlicher Frequenzen unterschiedliche Phaseninkremente für das Auslesen der Amplitudenwerte aus der gleichen Tabelle verwendet werden. Ein zunehmender Tabellenindex entspricht einem zunehmenden Phasenwinkel.

Auf diese Weise kann der jeweils benötigte Wert der periodischen Schwingung einfach aus der Tabelle ausgelesen werden, so dass Rechenzeit eingespart wird. Insbesondere kann dieselbe Tabelle für die unterschiedlichen Frequenzen der für die jeweiligen ersten Sendekanäle verwendeten periodischen Schwingungen verwendet werden. Somit wird lediglich eine Tabelle für die kleinste verwendete Frequenz benötigt.

Der Phasenwinkel wird somit mit dem Phaseninkrement inkrementiert, und aus dem neuen Wert des Phasenwinkels wird der Tabellenindex berechnet. Dabei ist vorzugsweise der Verlauf des Phasenwinkels periodisch mit einer Periodizität entsprechend 360°. Beispielsweise kann das inkrementieren eine Modulo-Operation umfassen.

Besonders bevorzugt umfasst die Tabelle lediglich ein Viertel einer Periode einer periodischen Schwingung, wobei zum Auslesen von Amplitudenwerten einer zweiten Hälfte einer ersten oder zweiten Halbperiode der periodischen Schwingung auf die Tabelle in umgekehrter Reihenfolge des Tabellenindex zugegriffen wird, und wobei beim Auslesen von Amplitudenwerten einer zweiten Halbperiode der periodischen Schwingung ein Vorzeichen des ausgelesenen Amplitudenwerts umgekehrt wird.

Auf diese Weise kann der Umfang der Tabelle gegenüber einem Speicher eines Verlaufs einer vollen Periode der Schwingung auf ein Viertel reduziert werden. Das Auslesen von Amplitudenwerten einer ersten Hälfte der ersten Halbwelle der periodischen Schwingung erfolgt direkt aus der Tabelle.

Vorzugsweise wird die Multiplikation als Multiplikation mit einer komplex-wertigen harmonischen Schwingung berechnet. Wenn beispielsweise bei einer Anzahl von N Sendekanälen ein OFDM-Symbol eines zweiten Sendekanals N-1 unbelegte Unterträger zwischen zwei belegten Unterträgern enthält, kann durch einfache Multiplikation im Zeitbereich mit einer komplexen harmonischen Schwingung mit der Frequenz entsprechend dem Unterträgerabstand multipliziert mit n=1, ..., N-1 ein orthogonales Symbol mit einer Anzahl von N-1 ersten Sendekanälen erzeugt werden.

Vorzugsweise weist der OFDM-Radarsensor je Sendekanal der mehreren Sendekanäle einen Einseitenband-Mischer auf, wobei das digital-analog-Wandeln eines Teils der Signalform ein digital-analog-Wandeln eines Realteils des Teils der Signalform und ein digital-analog-Wandeln eines Imaginärteils des Teils der Signalform umfasst, und wobei das Senden des Teils der Signalform ein Mischen des Realteils und des Imaginärteils des Teils der Signalform mit einem Radarsignal (einer Radarfrequenz) eines lokalen Oszillators mittels des Einseitenband-Mischers des Sendekanals umfasst.

Auf diese Weise kann durch die Multiplikation mit einer komplexen harmonischen Schwingung eine echte Frequenzverschiebung des betreffenden Teils der Signalform erfolgen, ohne dass im HF-modulierten Sendesignal ein zweites Seitenband erzeugt wird.

Vorzugsweise weist bei der genannten Betriebsweise ein jeweiliges OFDM-Symbol eines Signals eines jeweiligen Sendekanals der mehreren Sendekanäle unbelegte OFDM-Unterträger auf, wobei die in einem jeweiligen OFDM-Symbol eines Signals eines jeweiligen der Sendekanäle belegten OFDM-Unterträger im OFDM-Unterträgerspektrum verschachtelt angeordnet sind mit den belegten OFDM-Unterträgern der gleichzeitig gesendeten OFDM-Symbole der Signale der jeweils anderen Sendekanäle. Die verschachtelte Anordnung bedeutet insbesondere, dass die in einem jeweiligen OFDM-Symbol eines Signals eines jeweiligen der Sendekanäle belegten OFDM-Unterträger in den gleichzeitig gesendeten OFDM-Symbolen der Signale der jeweils anderen Sendekanäle unbelegt sind.

Auf diese Weise verwenden die verschiedenen Sendekanäle jeweilige überlappende gesamt-Frequenzbereiche, wobei die Frequenzen eines jeweiligen Sendekanals in Frequenzlücken der anderen angeordnet sind. Insbesondere weisen die Signale aller Sendekanäle vergleichbare spektrale Verteilungen der belegten OFDM-Unterträger der gleichzeitig gesendeten OFDM-Symbole auf, so dass die Radarsignaleigenschaften hochgradig ähnlich sind. Zugleich lassen sich auf diese Weise durch die genannte Multiplikation mit periodischen Schwingungen Signale für die ersten Sendekanäle auf einfache und effiziente Weise aus einem Signal eines zweiten Sendekanals berechnen.

Vorzugsweise besitzt jedes OFDM-Symbol zwischen benachbarten Gruppen von belegten OFDM-Unterträgern eine Anzahl von unbelegten OFDM-Unterträgern, welche Anzahl der Anzahl der übrigen Sendekanäle, multipliziert mit dem Umfang der Gruppen, entspricht. Beispielsweise können sich bei drei Sendekanälen Gruppen von 2 belegten OFDM-Unterträgern mit Lücken von 4 unbelegten OFDM-Unterträgern abwechseln (zwei übrige Sendekanäle mal Gruppenumfang 2).

Vorzugsweise wird das digital-analog-Wandeln und/oder das Auslesen eines Teils einer Signalform eines Signals zum digital-analog-Wandeln durch ein Taktsignal gesteuert, welches sich von einem Taktsignal unterscheidet, welches das Berechnen oder Zurverfügungstellen der jeweiligen Signalform eines Signals eines Sendekanals durch die Steuer- und Auswerteeinrichtung steuert. Besonders bevorzugt wird das digital-analog-Wandeln und/oder das Auslesen eines Teils einer Signalform eines Signals zum digital-analog-Wandeln durch ein Taktsignal gesteuert, welches sich von einem Taktsignal unterscheidet, welches das Berechnen der jeweiligen Signalform eines Signals eines ersten Sendekanals durch die Steuer- und Auswerteeinrichtung steuert. Das heißt, das Taktsignal des Digital-Analog-Wandlers unterscheidet sich von dem Taktsignal, welches den Betrieb der Steuer- und Auswerteeinrichtung insbesondere beim Berechnen der jeweiligen Signalform eines ersten Sendekanals steuert. Dies wird durch die Zwischenspeicher ermöglicht.

Weiter wird die Aufgabe gelöst durch ein Verfahren nach Anspruch 11. Vorzugsweise ist das Verfahren ein Verfahren zum Betreiben eines OFDM-Radarsensors wie beschrieben oder in einem der anderen Ansprüche angegeben.

Im folgenden werden Ausführungsbeispiele anhand der Zeichnung näher erläutert. Es zeigen:
- Fig. 1: eine schematische Darstellung eines OFDM-Radarsensors;
- Fig. 2: eine schematische Darstellung eines Verfahrens der Berechnung von Signalformen;
- Fig. 3: eine schematische Darstellung einer Variante einer Berechnung von Signalformen;
- Fig. 4: eine schematische Darstellung einer weiteren Variante einer Berechnung von Signalformen.
- Fig. 5: eine schematische Darstellung von belegten Unterträgern in OFDM-Symbolen mehrerer Sendekanäle; und
- Fig. 6.1 bis 6.3: schematische Darstellungen von Amplitudenwerten einer gespeicherten Tabelle.

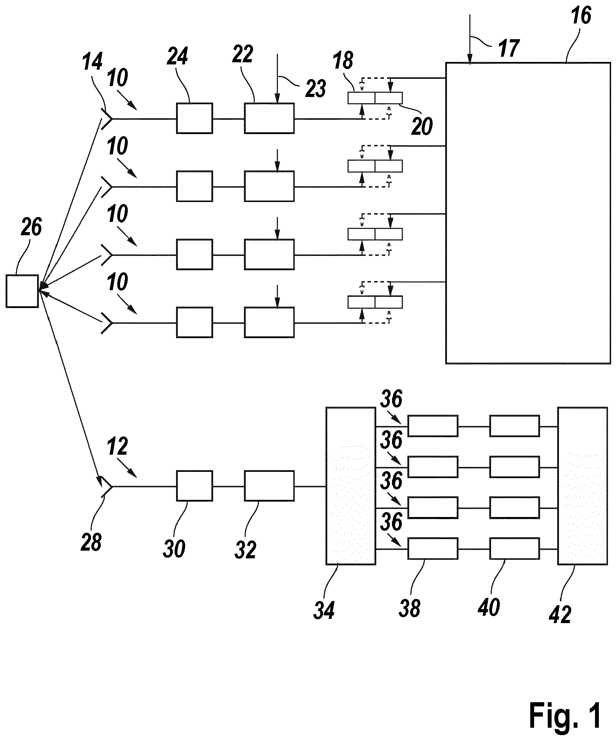

Fig. 1 zeigt ein Prinzipschaltbild eines OFDM-Radarsensors mit beispielsweise vier Sendekanälen 10 und beispielsweise einem Empfangskanal 12. Die Sendekanäle 10 umfassen jeweils eine Sendeantenne 14. Eine erste Einrichtung 16 einer Steuer- und Auswerteeinrichtung, die von einem Taktsignal 17 gesteuert wird, berechnet für die einzelnen Sendekanäle 10 jeweilige Signalformen eines Sendesignals. Die Signalformen werden beispielsweise fortschreitend in Teilen berechnet. Je Sendekanal 10 sind zwei oder mehr Zwischenspeicher 18, 20 für berechnete Teile der Signalformen vorgesehen, in denen umschichtig berechnete Teile der Signalform des Sendesignals durch die ersten Einrichtung 16 abgelegt werden.

Ein Digital-Analog-Wandler 22, welcher von einem Taktsignal 23 gesteuert wird, greift umschichtig auf die Zwischenspeicher 18, 20 zu und erzeugt aus dem betreffenden ausgelesenen Teil der Signalform ein analoges Signal. Das analoge Signal wird durch einen Modulator 24 hochfrequenzmoduliert und von der Sendeantenne 14 abgestrahlt. Das abgestrahlte Sendesignal, welches von einem oder mehreren Radarobjekten 26 reflektiert wird, wird von einer Empfangsantenne 28 empfangen, von einem Modulator 30 hochfrequenzdemoduliert und im Empfangskanal 12 von einem Analog-Digital-Wandler 32 digitalisiert.

Die Sendesignale der einzelnen Sendekanäle 10 haben jeweils Signalformen, die einer Folge von OFDM-Symbolen entsprechen. Dabei sind für gleichzeitig auf den unterschiedlichen Sendekanälen 10 gesendete OFDM-Symbole die belegten OFDM-Unterträger eines OFDM-Symbols eines Sendekanals orthogonal zu den in den gleichzeitig gesendeten OFDM-Symbolen der anderen Sendekanäle belegten OFDM-Unterträger.

Im Empfangskanal 12 folgt eine Transformation in den Frequenzbereich durch eine Transformationseinrichtung 34, beispielsweise mittels FFT. Im Frequenzbereich werden die im erhaltenen Spektrum enthaltenen Frequenzen, die den Frequenzen der OFDM-Unterträger der Sendekanäle 10 entsprechen, auf Empfangszweige 36 aufgeteilt entsprechend der Zuordnung der enthaltenen OFDM-Unterträgerfrequenzen zu den in den jeweiligen Sendekanälen 10 belegten OFDM-Unterträgern. Der in einem jeweiligen Empfangszweig 36 weiterverarbeitete Signalanteil entspricht somit einem zugeordneten der Sendekanäle 10.

In jedem Empfangszweig 36 erfolgt durch einen OFDM-Demodulator 38 eine OFDM-Demodulation des Signalanteils. Die dadurch erhaltene Kanalinformation wird durch jeweilige Detektionseinrichtungen 40 der Steuer- und Auswerteeinheit weiter ausgewertet, indem beispielsweise Geschwindigkeiten und/oder Abstände eines Radarobjekts 26 detektiert werden. Eine weitere Einrichtung 42 der Steuer- und Auswerteeinrichtung wertet die von den Detektionseinrichtungen 40 erhaltenen Objektdetektionen der einzelnen Empfangszweige 36 aus.

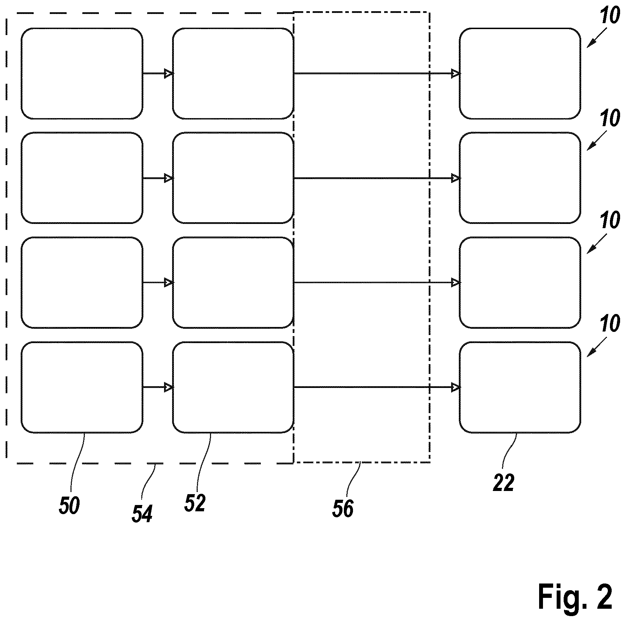

Fig. 2 zeigt eine erste Variante einer Berechnung der Signalformen der Sendesignale der Sendekanäle 10, wie sie beispielsweise in einer Ausführungsform der Erfindung von der ersten Einrichtung 16 der Steuer- und Auswerteeinrichtung durchgeführt werden kann. In diesem Beispiel umfasst die erste Einrichtung 16 Phasencodespeicher 50 für jeden Sendekanal 10. Der Phasencodespeicher 50 eines Sendekanals 10 speichert beispielsweise für ein OFDM-Symbol eines Sendekanals einen Phasencode zu jedem zu belegenden OFDM-Unterträger des OFDM-Symbols. Als Phasencode kann beispielsweise ein 2-Bit QPSK (Quadrature Phase-Shift-Keying) Code verwendet werden. Die Anzahl der belegten OFDM-Unterträger eines OFDM-Symbols kann beispielsweise 512 betragen. Je OFDM-Symbol eines Sendekanals umfasst der Phasencodespeicher 50 somit 512 x 2 Bit.

Durch komplexe Modulation von für die jeweiligen Sendekanäle zu belegenden OFDM-Unterträgern mit den gespeicherten Phasencodes werden bei der Durchführung einer Transformation der OFDM-Symbole in den Zeitbereich, beispielsweise mittels einer IFFT 52, Signalformen der gleichzeitig zu sendenden OFDM-Symbole der verschiedenen Sendekanäle 10 parallel für die Sendekanäle berechnet. Jede Signalform eines OFDM-Symbols stellt einen Teil einer auf dem betreffenden Sendekanal zu sendenden Folge von OFDM-Symbolen dar. Die jeweils berechnete Signalform eines OFDM-Symbols wird beispielsweise in einem der Zwischenspeicher 18, 20 abgelegt, während aus dem anderen der Zwischenspeicher 18, 20 eine zuvor berechnete Signalform eines vorhergehenden OFDM-Symbols von dem Digital-Analog-Wandler 22 ausgelesen und gewandelt wird. In Fig. 2 sind die im Frequenzbereich 54 durchgeführten Operationen und die im Zeitbereich 56 durchgeführten Operationen durch die gestrichelt dargestellten Bereiche 54, 56 gekennzeichnet.

Die dargestellte Berechnung kann beispielsweise in einem FPGA (Field Programmable Gate Array) oder einem ASIC (Application Specific Integrated Circuit) implementiert sein. Sie zeichnet sich durch einen besonders geringen Speicherbedarf aus, da die hier beschriebenen Berechnungen im laufenden Betrieb durchgeführt werden, basierend auf den gespeicherten Phasencodes für die OFDM-Symbole.

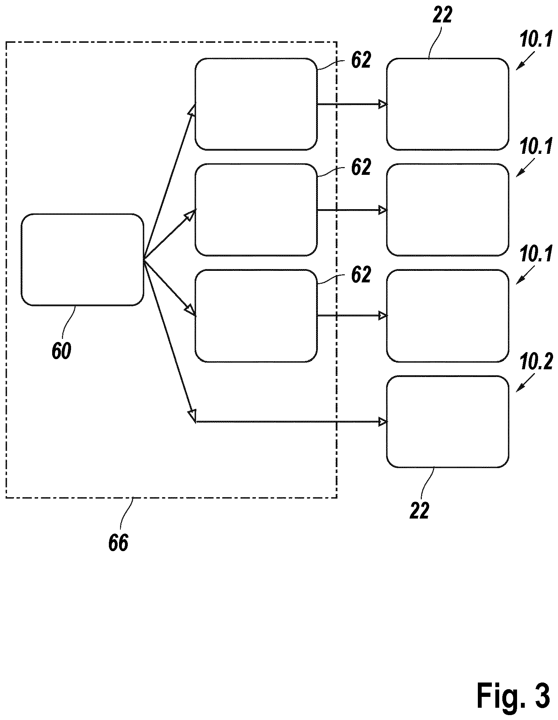

Fig. 3 zeigt eine zweite Variante der Berechnung der Signalformen der zu sendenden Signale, wie sie beispielsweise in einer Ausführungsform durch die erste Einrichtung 16 der Steuer- und Auswerteeinrichtung durchgeführt werden kann. In diesem Beispiel umfasst der OFDM-Radarsensor einen ZeitsignalSpeicher 60, in dem ein Zeitsignal (eine Signalform), welches einem oder mehreren OFDM-Symbolen entspricht, gespeichert ist. Der Zeitsignalspeicher 60 kann beispielsweise für ein OFDM-Symbol eine Anzahl von 2048 Samples mit einer Auflösung von beispielsweise 16 Bit umfassen.

Für erste Sendekanäle 10.1 wird daraus durch Multiplikation mit der komplexen harmonischen Schwingung exp (i2πnΔft) ein entsprechender Teil eines Sendesignals erzeugt. Dabei ist im einfachsten Fall Δf der Abstand zwischen den Unterträgern der verwendeten OFDM-Codierung, n die Nummer des jeweiligen ersten Sendekanals (n = 1,..., 3), und t die Zeit. Die Multiplikation wird in den ersten Sendekanälen 10.1 jeweils durch einen digitalen Mischer 62 durchgeführt. Durch die Verwendung komplexer Signalformen und eines Digital-Analog-Wandlers 22, der Realteil und Imaginärteil separat wandelt (entsprechend einer Wandlung von I/Q-Komponenten), kann auf rechnerisch einfache Weise eine echte Frequenzverschiebung erreicht werden.

Für einen zweiten Sendekanal 10.2 wird das aus dem Zeitsignalspeicher 60 ausgelesene Zeitsignal direkt als Zeitsignal zur Verfügung gestellt, d.h. ohne die Multiplikation durch einen Mischer 62.

Diese Ausführungsform hat den Vorteil, dass nur eine geringe Rechenleistung benötigt wird. Die Berechnungen, basierend auf dem im Zeitsignalspeicher 60 gespeicherten Signal, finden im Zeitbereich 66 statt, wie in Fig. 3 gestrichelt dargestellt ist.

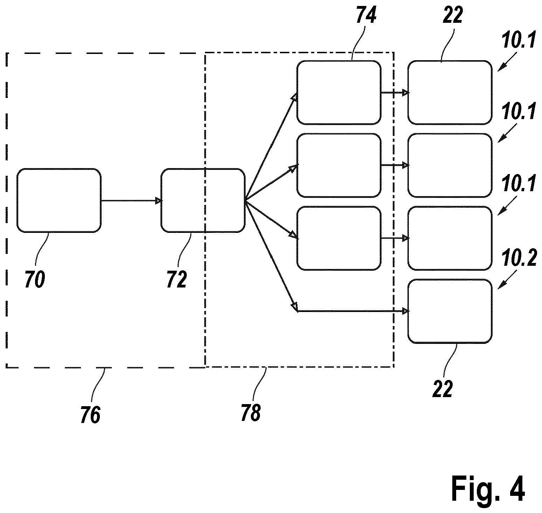

Fig. 4 zeigt eine dritte Variante der Berechnung, wie sie beispielsweise in einer Ausführungsform in der ersten Einrichtung 16 der Steuer- und Auswerteeinrichtung durchgeführt werden kann. In diesem Beispiel umfasst der OFDM-Radarsensor einen Phasencode-Speicher 70, der Phasencodes für ein oder mehrere OFDM-Symbole speichert. Dabei kann es sich um generische OFDM-Symbole oder um OFDM-Symbole für einen zweiten Sendekanal 10.2 handeln. Beispielsweise wird, entsprechend der Variante der Fig. 2, aus den im Phasencodespeicher 70 gespeicherten Phasencodes eines OFDM-Symbols mittels Transformation von OFDM-Unterträgern mit Phasenmodulation gemäß dem Phasencode ein Zeitsignal für einen zweiten Sendekanal 10.2 durch eine Transformationseinheit 72 berechnet. Dies entspricht der Berechnung eines Sendekanals der Variante der Fig. 2.

Für die ersten Sendekanäle 10.1 wird ein entsprechendes Zeitsignal durch Multiplikation mit einer komplexen harmonischen Schwingung entsprechend der Multiplikation in der Variante der Fig. 3 durch Mischer 74 berechnet. Dabei wird für den n-ten ersten Sendekanal 10.1 die komplexe harmonischen Schwingung mit der Frequenz nΔf verwendet. In Fig. 4 ist wiederum gekennzeichnet, welcher Teil der Berechnungen in dem Frequenzbereich 76 und welcher im Zeitbereich 78 erfolgt.

In diesem Beispiel werden somit die Berechnungsverfahren der ersten und zweiten Varianten in vorteilhafter Weise kombiniert, so dass eine gewünschte Auslegung der Sende- und Auswerteeinheit hinsichtlich ihrer Rechenleistung und des benötigten Speichers optimiert werden kann.

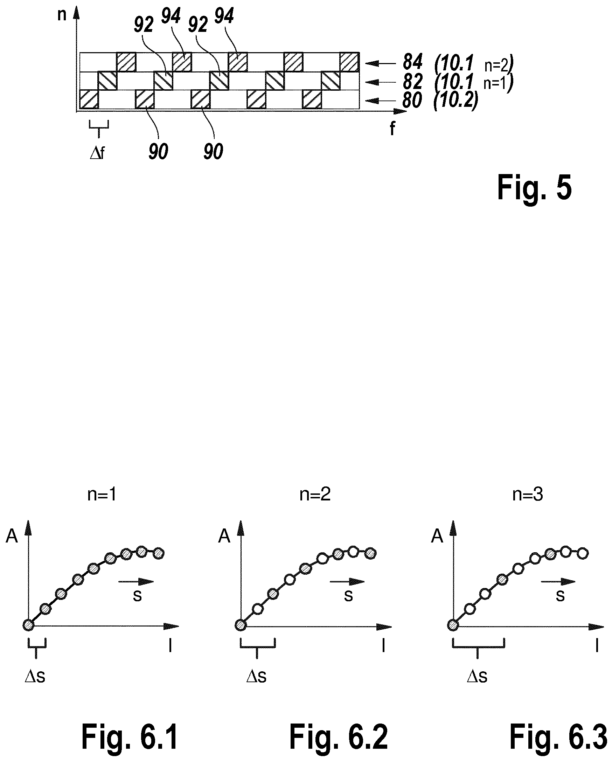

Fig. 5 zeigt schematisch ein Beispiel für die Belegung von OFDM-Unterträgern in gleichzeitig gesendeten OFDM-Symbolen 80, 82, 84 der verschiedenen Sendekanäle 10, wie es bei den oben beschriebenen Ausführungsformen vorgesehen sein kann. Zur Vereinfachung der Darstellung ist ein Beispiel mit einem zweiten Sendekanal 10.2 und zwei ersten Sendekanälen 10.1 (für n = 1, n = 2) dargestellt. Die verschiedenen OFDM-Symbole 80, 82, 84 der unterschiedlichen Sendekanäle 10.2, 10.1 sind in Fig. 5 übereinander angeordnet dargestellt. Der zweite Sendekanal 10.2 hat in einem OFDM-Symbol 80 belegte OFDM-Unterträger 90, zwischen denen jeweils mehrere OFDM-Unterträger (OFDM-Unterträgerfrequenzen) unbelegt sind. Die ersten Sendekanäle 10.1 haben in ihren OFDM-Symbolen 82, 84 belegte OFDM-Unterträger 92 bzw. 94, wobei je Sendekanal 10.1 zwischen belegten OFDM-Unterträgern 92 bzw. 94 jeweils mehrere OFDM-Unterträger unbelegt sind. Die belegten OFDM-Unterträger 90, 92, 94 sind durch gefüllte Kästen über der Frequenz f dargestellt. Im gezeigten Beispiel besitzt jedes OFDM-Symbol 80, 82, 84 zwischen benachbarten und belegten OFDM-Unterträgern eine Anzahl von unbelegten OFDM-Unterträgern, welche Anzahl der Anzahl der übrigen Sendekanäle entspricht.

Wie oben für die Beispiele der Fig. 3 und Fig. 4 erläutert, kann durch einfache Multiplikation mit einer harmonischen Schwingung im Zeitbereich aus dem Zeitsignal des zweiten Sendekanals 10.2 ein dazu orthogonales Zeitsignal eines jeweiligen ersten Sendekanals 10.1 erzeugt werden. In diesem Beispiel sind somit die belegten OFDM-Unterträger eines jeweiligen Sendekanals 10.1, 10.2 im OFDM-Unterträgerspektrum verschachtelt mit den belegten OFDM-Unterträgern der jeweils anderen Sendekanäle 10 angeordnet.

In der Praxis kann beispielsweise eine Bandbreite von 1 GHz genutzt werden für 3000 OFDM-Unterträger mit einem Unterträgerabstand Δf von 333 KHz.

Fig. 6 zeigt schematisch in einer gespeicherten Tabelle des OFDM-Radarsensors enthaltene Amplitudenwerte A einer periodischen Schwingung, wie sie beispielsweise für die Multiplikation mit einer komplexwertigen harmonischen Schwingung in einem der Beispiele der Figuren 3, 4 und 5 verwendet werden kann. Die Amplitudenwerte A sind über dem Tabellenindex I dargestellt.

Da in den beschriebenen Beispielen die Frequenz der harmonischen Schwingung, mit der die jeweilige Multiplikation für einen ersten Sendekanal 10.1 durchgeführt wird, ein Vielfaches einer kleinsten derartigen Frequenz Δf ist, genügt es, wenn die Tabelle lediglich Amplitudenwerte eines Viertels einer Periode der harmonischen Schwingung umfasst, wobei aufgrund der Phasenverschiebung zwischen Sinus und Kosinus beispielsweise ein Viertel einer reellen Sinuswelle genügt.

Für eine elementweise Multiplikation eines Abtastwertes (Samples) eines Zeitsignals eines ersten Sendekanals 10.1 mit entsprechenden Amplitudenwerten A einer Schwingung mit der genannten kleinsten Frequenz werden, wie in Fig. 6.1 gezeigt, die aufeinanderfolgenden Amplitudenwerte aus der Tabelle herangezogen. Für höhere Frequenzen der harmonischen Schwingung, mit der multipliziert werden soll, wird bei gleicher Abtastrate jeder n-te Wert zur elementweisen Multiplikation aus der Tabelle herangezogen, wie in Fig. 6.2 für n=2 mit ausgeführten Symbolen für die entsprechenden Amplitudenwerte dargestellt ist. Fig. 6.3 zeigt eine entsprechende Darstellung für n=3, bei dem nur jeder dritte Wert aus der Tabelle für das elementweise Multiplizieren herangezogen wird.

Durch Multiplikation mit -1 und durch Spiegeln der Reihenfolge der ausgewiesenen Werte kann die gesamte Periode der harmonischen Schwingung erzeugt werden, so dass der erforderliche Speicher für die Tabelle weiter minimiert werden kann.

## Patentansprüche

1. OFDM-Radarsensor mit mehreren Sendekanälen (10) und mit wenigstens einem Empfangskanal (12), mit einer Steuer- und Auswerteeinrichtung (16, 34, 38, 40, 42), die für eine Betriebsweise ausgelegt ist, bei der die mehreren Sendekanäle (10) jeweilige Signale senden, wobei ein Signal eines jeweiligen Sendekanals (10) eine Folge von OFDM-Symbolen (80) umfasst und wobei die Signale der mehreren Sendekanäle (10) gleichzeitig gesendet werden,
wobei die auf einem jeweiligen Sendekanal (10) gesendeten OFDM-Symbole (80) jeweils OFDM-Unterträger (90) aufweisen, die orthogonal sind zu den OFDM-Unterträgern (92, 94) der gleichzeitig auf den anderen der mehreren Sendekanäle (10) gesendeten OFDM-Symbole (82, 84),
wobei für ein von dem wenigstens einen Empfangskanal (12) empfangenen Empfangssignal eine spektrale Trennung von Signalanteilen des Empfangssignals erfolgt, wobei eine Aufteilung von OFDM-Unterträgern auf die Signalanteile entsprechend ihrer Aufteilung auf die Sendekanäle (10) in den gleichzeitig auf den Sendekanälen (10) gesendeten OFDM-Symbolen (80, 82, 84) erfolgt und eine Auswertung der Signalanteile erfolgt,
**dadurch gekennzeichnet dass**
der OFDM-Radarsensor wenigstens für erste Sendekanäle (10.1) der mehreren Sendekanäle je erstem Sendekanal (10.1) mehrere Zwischenspeicher (18; 20) für Teile einer Signalform des zu sendenden Signals des Sendekanals (10.1) aufweist,
wobei bei der genannten Betriebsweise wenigstens für die ersten Sendekanäle (10.1) je Sendekanal (10.1) die Signalform des zu sendenden Signals, welche die betreffende Folge von OFDM-Symbolen (82) umfasst, fortschreitend in Teilen berechnet wird, wobei die mehreren Zwischenspeicher (18; 20) umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform berechnet und in einem der Zwischenspeicher (20) abgelegt wird, während ein vorhergehender Teil der Signalform bereits aus einem anderen der Zwischenspeicher (18) ausgelesen und digital-analog-gewandelt wird und auf dem betreffenden Sendekanal (10.1) gesendet wird.

2. OFDM-Radarsensor nach Anspruch 1, bei dem der OFDM-Radarsensor für jeden der mehreren Sendekanäle (10) je Sendekanal (10) mehrere Zwischenspeicher (18; 20) für Teile einer Signalform des zu sendenden Signals des Sendekanals (10) aufweist,
wobei bei der genannten Betriebsweise für jeden der mehreren Sendekanäle (10) die Signalform des zu sendenden Signals, welche die betreffende Folge von OFDM-Symbolen (80) umfasst, fortschreitend in Teilen berechnet wird, wobei die mehreren Zwischenspeicher (18; 20) umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform basierend auf Phasencodes berechnet wird, welche durch ein jeweiliges OFDM-Symbol (80) der Folge von OFDM-Symbolen (80) des Signals jeweiligen OFDM-Unterträgern zugeordnet sind,
wobei ein jeweiliger Teil der Signalform berechnet und in einem der Zwischenspeicher (20) abgelegt wird, während ein vorhergehender Teil der Signalform bereits aus einem anderen der Zwischenspeicher (18) ausgelesen und digital-analog-gewandelt wird und auf dem betreffenden Sendekanal (10) gesendet wird.

3. OFDM-Radarsensor nach Anspruch 1, wobei die Steuer- und Auswerteeinrichtung (16, 34, 38, 40, 42) dazu ausgelegt ist, bei der genannten Betriebsweise für die ersten Sendekanäle (10.1) den jeweiligen Teil der Signalform des zu sendenden Signals des Sendekanals (10.1) aus einem entsprechenden Teil einer Signalform eines generischen Signals oder aus einem entsprechenden Teil einer Signalform eines zu sendenden Signals eines zweiten Sendekanals (10.2) von wenigstens einem zweiten Sendekanal (10.2) der mehreren Sendekanäle (10) zu berechnen mittels Multiplikation mit einer periodischen Schwingung mit einer Frequenz, die einem n-fachen eines OFDM-Unterträgerabstands (Δf) entspricht, wobei n eine ganze Zahl ungleich Null ist, und wobei für unterschiedliche erste Sendekanäle (10.1) unterschiedliche n verwendet werden.

4. OFDM-Radarsensor nach Anspruch 3, wobei der OFDM-Radarsensor einen Speicher (60) aufweist, in welchem wenigstens eine Signalform wenigstens eines OFDM-Symbols (80) gespeichert ist,
wobei bei der genannten Betriebsweise für den wenigstens einen zweiten Sendekanal (10.2) der mehreren Sendekanäle (10) die Signalform des Signals eines jeweiligen zweiten Sendekanals (10.2) mehrere Teile umfasst, die jeweils wenigstens ein OFDM-Symbol (80) umfassen, und
wobei die Teile bereitgestellt werden und digital-analog-gewandelt und auf dem betreffenden zweiten Sendekanal (10.2) gesendet werden,
wobei zum Bereitstellen eines jeden Teils der genannten Teile der Signalform des Signals des betreffenden zweiten Sendekanals (10.2) auf die wenigstens eine in dem Speicher (60) gespeicherte Signalform zugegriffen wird,
wobei für die ersten Sendekanäle (10.1) der jeweilige Teil der Signalform des zu sendenden Signals des jeweiligen Sendekanals (10.1) aus einem entsprechenden Teil der Signalform eines zu sendenden Signals eines zweiten Sendekanals (10.2) von wenigstens einem zweiten Sendekanal (10.2) der mehreren Sendekanäle (10) berechnet wird mittels der Multiplikation mit einer periodischen Schwingung mit einer Frequenz, die einem n-fachen eines OFDM-Unterträgerabstands (Δf) entspricht, wobei n eine ganze Zahl ungleich Null ist, und wobei für unterschiedliche erste Sendekanäle (10.1) unterschiedliche n verwendet werden.

5. OFDM-Radarsensor nach Anspruch 3, bei dem der OFDM-Radarsensor für wenigstens einen zweiten Sendekanal (10.2) der mehreren Sendekanäle (10) je zweitem Sendekanal (10.2) mehrere Zwischenspeicher (18; 20) für Teile einer Signalform des zu sendenden Signals des Sendekanals (10.2) aufweist,
wobei bei der genannten Betriebsweise für den wenigstens einen zweiten Sendekanal (10.2) je Sendekanal die Signalform des zu sendenden Signals, welche die betreffende Folge von OFDM-Symbolen (80) umfasst, fortschreitend in Teilen berechnet wird, wobei die mehreren Zwischenspeicher (18; 20) umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform berechnet und in einem der Zwischenspeicher (20) abgelegt wird, während ein vorhergehender Teil der Signalform bereits aus einem anderen der Zwischenspeicher (18) ausgelesen und digital-analog-gewandelt wird und auf dem betreffenden Sendekanal (10.2) gesendet wird,
wobei ein jeweiliger Teil der Signalform basierend auf Phasencodes berechnet wird, welche durch ein jeweiliges OFDM-Symbol (80) der Folge von OFDM-Symbolen (80) des Signals jeweiligen OFDM-Unterträgern (90) zugeordnet sind, und
wobei für die ersten Sendekanäle (10.1) der jeweilige Teil der Signalform des zu sendenden Signals des jeweiligen Sendekanals aus einem entsprechenden Teil der Signalform eines zu sendenden Signals eines zweiten Sendekanals (10.2) von wenigstens einem zweiten Sendekanal der mehreren Sendekanäle berechnet wird mittels der Multiplikation mit einer periodischen Schwingung mit einer Frequenz, die einem n-fachen eines OFDM-Unterträgerabstands (Δf) entspricht, wobei n eine ganze Zahl ungleich Null ist, und wobei für unterschiedliche erste Sendekanäle (10.1) unterschiedliche n verwendet werden.

6. OFDM-Radarsensor nach einem der Ansprüche 3 bis 5, bei dem die Steuer- und Auswerteeinrichtung (16, 34, 38, 40, 42) dazu ausgelegt ist, bei der genannten Betriebsweise Amplitudenwerte (A) der jeweiligen periodischen Schwingung zu bestimmen durch Auslesen der Amplitudenwerte (A) aus einer Tabelle gemäß einem Tabellenindex (I), der in Abhängigkeit eines Phasenwinkels (s) bestimmt wird, welcher für zeitlich nachfolgende Amplitudenwerte (A) der Schwingung inkrementiert wird, wobei für Schwingungen unterschiedlicher Frequenzen unterschiedliche Phaseninkremente (Δs) für das Auslesen der Amplitudenwerte (A) aus der gleichen Tabelle verwendet werden.

7. OFDM-Radarsensor nach Anspruch 6, bei dem die Tabelle lediglich ein Viertel einer Periode einer periodischen Schwingung umfasst, wobei zum Auslesen von Amplitudenwerten (A) einer zweiten Hälfte einer ersten oder zweiten Halbperiode der periodischen Schwingung auf die Tabelle in umgekehrter Reihenfolge des Tabellenindex (I) zugegriffen wird, und wobei beim Auslesen von Amplitudenwerten (A) einer zweiten Halbperiode der periodischen Schwingung ein Vorzeichen des ausgelesenen Amplitudenwerts (A) umgekehrt wird.

8. OFDM-Radarsensor nach einem der Ansprüche 3 bis 7, bei dem die Multiplikation als Multiplikation mit einer komplex-wertigen harmonischen Schwingung berechnet wird.

9. OFDM-Radarsensor nach einem der vorstehenden Ansprüche, wobei bei der genannten Betriebsweise ein jeweiliges OFDM-Symbol (80) eines Signals eines jeweiligen Sendekanals (10) der mehreren Sendekanäle unbelegte OFDM-Unterträger aufweist,
wobei die in einem jeweiligen OFDM-Symbol (80) eines Signals eines jeweiligen der Sendekanäle belegten OFDM-Unterträger (90) im OFDM-Unterträgerspektrum verschachtelt angeordnet sind mit den belegten OFDM-Unterträgern (92; 94) der gleichzeitig gesendeten OFDM-Symbole (82; 84) der Signale der jeweils anderen Sendekanäle (10).

10. OFDM-Radarsensor nach einem der vorstehenden Ansprüche, bei dem das digital-analog-Wandeln und/oder das Auslesen eines Teils einer Signalform eines Signals zum digital-analog-Wandeln durch ein Taktsignal (23) gesteuert wird, welches sich von einem Taktsignal (17) unterscheidet, welches das Berechnen oder Zurverfügungstellen der jeweiligen Signalform eines Signals eines Sendekanals durch die Steuer- und Auswerteeinrichtung (16, 34, 38, 40, 42) steuert.

11. Verfahren zum Betreiben eines OFDM-Radarsensors mit mehreren Sendekanälen (10) und mit wenigstens einem Empfangskanal (12), wobei der OFDM-Radarsensor wenigstens für erste Sendekanäle (10.1) der mehreren Sendekanäle je erstem Sendekanal (10.1) mehrere Zwischenspeicher (18; 20) für Teile einer Signalform des zu sendenden Signals des Sendekanals (10.1) aufweist, wobei das Verfahren umfasst:
Senden jeweiliger Signale auf den mehreren Sendekanälen (10), wobei ein Signal eines jeweiligen Sendekanals (10) eine Folge von OFDM-Symbolen (80) umfasst und wobei die Signale der mehreren Sendekanäle (10) gleichzeitig gesendet werden, wobei die auf einem jeweiligen Sendekanal (10) gesendeten OFDM-Symbole (80) jeweils OFDM-Unterträger (90) aufweisen, die orthogonal sind zu den OFDM-Unterträgern (92; 94) der gleichzeitig auf den anderen der mehreren Sendekanäle (10) gesendeten OFDM-Symbole (82; 84);
Empfangen eines Empfangssignals auf dem wenigstens einen Empfangskanal (12);
Spektrales Trennen von Signalanteilen des Empfangssignals, wobei eine Aufteilung von OFDM-Unterträgern auf die Signalanteile entsprechend ihrer Aufteilung auf die Sendekanäle (10) in den gleichzeitig auf den Sendekanälen (10) gesendeten OFDM-Symbolen (80; 82; 84) erfolgt; und
Auswerten der Signalanteile,
wobei wenigstens für die ersten Sendekanäle (10.1) je Sendekanal die Signalform des zu sendenden Signals, welche die betreffende Folge von OFDM-Symbolen (82) umfasst, fortschreitend in Teilen berechnet wird, wobei die mehreren Zwischenspeicher (18; 20) umschichtig verwendet werden zum Ablegen eines berechneten Teils der Signalform und zum Auslesen eines zuvor berechneten und abgelegten vorhergehenden Teils der Signalform, welcher digital-analog-gewandelt und gesendet wird,
wobei ein jeweiliger Teil der Signalform berechnet und in einem der Zwischenspeicher (20) abgelegt wird, während ein vorhergehender Teil der Signalform bereits aus einem anderen der Zwischenspeicher (18) ausgelesen und digital-analog-gewandelt wird und auf dem betreffenden Sendekanal (10.1) gesendet wird.

## Claims

1. OFDM radar sensor having a plurality of transmitting channels (10) and at least one receiving channel (12), having a control and evaluation device (16, 34, 38, 40, 42) which is designed for an operating mode in which the plurality of transmitting channels (10) transmit respective signals, wherein a signal in a respective transmitting channel (10) comprises a sequence of OFDM symbols (80), and wherein the signals in the plurality of transmitting channels (10) are transmitted at the same time,
wherein the OFDM symbols (80) transmitted in a respective transmitting channel (10) each have OFDM subcarriers (90) which are orthogonal to the OFDM subcarriers (92, 94) of the OFDM symbols (82, 84) simultaneously transmitted in the other ones of the plurality of transmitting channels (10),
wherein, for a reception signal received by the at least one receiving channel (12), signal components of the reception signal are spectrally separated, wherein OFDM subcarriers are divided among the signal components according to their division among the transmitting channels (10) in the OFDM symbols (80, 82, 84) simultaneously transmitted in the transmitting channels (10), and the signal components are evaluated,
**characterized in that**
the OFDM radar sensor has, at least for first transmitting channels (10.1) of the plurality of transmitting channels, a plurality of buffers (18; 20) for each first transmitting channel (10.1) for parts of a signal waveform of the signal to be transmitted in the transmitting channel (10.1),
wherein, in the operating mode mentioned, at least for the first transmitting channels (10.1), the signal waveform of the signal to be transmitted, which comprises the relevant sequence of OFDM symbols (82), is progressively calculated in parts for each transmitting channel (10.1), wherein the plurality of buffers (18; 20) are used alternately to store a calculated part of the signal waveform and to read out a previously calculated and stored preceding part of the signal waveform which is subjected to digital/analogue conversion and is transmitted,
wherein a respective part of the signal waveform is calculated and is stored in one of the buffers (20), whereas a preceding part of the signal waveform is already read out from another one of the buffers (18) and is subjected to digital/analogue conversion and is transmitted in the relevant transmitting channel (10.1).

2. OFDM radar sensor according to Claim 1, in which the OFDM radar sensor has, for each of the plurality of transmitting channels (10), a plurality of buffers (18; 20) for each transmitting channel (10) for parts of a signal waveform of the signal to be transmitted in the transmitting channel (10),
wherein, in the operating mode mentioned, for each of the plurality of transmitting channels (10), the signal waveform of the signal to be transmitted, which comprises the relevant sequence of OFDM symbols (80), is progressively calculated in parts, wherein the plurality of buffers (18; 20) are used alternately to store a calculated part of the signal waveform and to read out a previously calculated and stored preceding part of the signal waveform which is subjected to digital/analogue conversion and is transmitted,
wherein a respective part of the signal waveform is calculated on the basis of phase codes which are assigned to respective OFDM subcarriers by means of a respective OFDM symbol (80) in the sequence of OFDM symbols (80) of the signal,
wherein a respective part of the signal waveform is calculated and is stored in one of the buffers (20), whereas a preceding part of the signal waveform is already read out from another one of the buffers (18) and is subjected to digital/analogue conversion and is transmitted in the relevant transmitting channel (10).

3. OFDM radar sensor according to Claim 1, wherein the control and evaluation device (16, 34, 38, 40, 42) is designed, in the operating mode mentioned, to calculate, for the first transmitting channels (10.1), the respective part of the signal waveform of the signal to be transmitted in the transmitting channel (10.1) from a corresponding part of a signal waveform of a generic signal or from a corresponding part of a signal waveform of a signal to be transmitted in a second transmitting channel (10.2) of at least one second transmitting channel (10.2) of the plurality of transmitting channels (10) by means of multiplication by a periodic oscillation at a frequency corresponding to n times an OFDM subcarrier spacing (Δf), where n is an integer that is not equal to zero, and wherein different values of n are used for different first transmitting channels (10.1).

4. OFDM radar sensor according to Claim 3, wherein the OFDM radar sensor has a memory (60) in which at least one signal waveform of at least one OFDM symbol (80) is stored,
wherein, in the operating mode mentioned, for the at least one second transmitting channel (10.2) of the plurality of transmitting channels (10), the signal waveform of the signal in a respective second transmitting channel (10.2) comprises a plurality of parts which each comprise at least one OFDM symbol (80), and
wherein the parts are provided and are subjected to digital/analogue conversion and are transmitted in the relevant second transmitting channel (10.2),
wherein, in order to provide each part of said parts of the signal waveform of the signal in the relevant second transmitting channel (10.2), the at least one signal waveform stored in the memory (60) is accessed,
wherein, for the first transmitting channels (10.1), the respective part of the signal waveform of the signal to be transmitted in the respective transmitting channel (10.1) is calculated from a corresponding part of the signal waveform of a signal to be transmitted in a second transmitting channel (10.2) of at least one second transmitting channel (10.2) of the plurality of transmitting channels (10) by means of multiplication by a periodic oscillation at a frequency corresponding to n times an OFDM subcarrier spacing (Δf), where n is an integer that is not equal to 0, and wherein different values of n are used for different first transmitting channels (10.1).

5. OFDM radar sensor according to Claim 3, in which the OFDM radar sensor has, for at least one second transmitting channel (10.2) of the plurality of transmitting channels (10), a plurality of buffers (18; 20) for each second transmitting channel (10.2) for parts of a signal waveform of the signal to be transmitted in the transmitting channel (10.2),
wherein, in the operating mode mentioned, for the at least one second transmitting channel (10.2), the signal waveform of the signal to be transmitted, which comprises the relevant sequence of OFDM symbols (80), is progressively calculated in parts for each transmitting channel, wherein the plurality of buffers (18; 20) are used alternately to store a calculated part of the signal waveform and to read out a previously calculated and stored preceding part of the signal waveform which is subjected to digital/analogue conversion and is transmitted,
wherein a respective part of the signal waveform is calculated and is stored in one of the buffers (20), whereas a preceding part of the signal waveform is already read out from another one of the buffers (18) and is subjected to digital/analogue conversion and is transmitted in the relevant transmitting channel (10.2),
wherein a respective part of the signal waveform is calculated on the basis of phase codes which are assigned to respective subcarriers (90) by means of a respective OFDM symbol (80) in the sequence of OFDM symbols (80) of the signal, and
wherein, for the first transmitting channels (10.1), the respective part of the signal waveform of the signal to be transmitted in the respective transmitting channel is calculated from a corresponding part of the signal waveform of a signal to be transmitted in a second transmitting channel (10.2) of at least one second transmitting channel of the plurality of transmitting channels by means of multiplication by a periodic oscillation at a frequency corresponding to n times an OFDM subcarrier spacing (Δf), where n is an integer that is not equal to zero, and wherein different values of n are used for different first transmitting channels (10.1).

6. OFDM radar sensor according to one of Claims 3 to 5, in which the control and evaluation device (16, 34, 38, 40, 42) is designed, in the operating mode mentioned, to determine amplitude values (A) of the respective periodic oscillation by reading out the amplitude values (A) from a table according to a table index (I) which is determined on the basis of a phase angle (s) which is incremented for subsequent amplitude values (A) of the oscillation, wherein different phase increments (Δs) for reading out the amplitude values (A) from the same table are used for oscillations of different frequencies.

7. OFDM radar sensor according to Claim 6, in which the table comprises only a quarter of a period of a periodic oscillation, wherein, in order to read out amplitude values (A) of a second half of a first or second half-period of the periodic oscillation, the table is accessed in the reverse order of the table index (I), and wherein, in order to read out amplitude values (A) of a second half-period of the periodic oscillation, a sign of the amplitude value (A) that has been read out is reversed.

8. OFDM radar sensor according to one of Claims 3 to 7, in which the multiplication is calculated as a multiplication by a complex-valued harmonic oscillation.

9. OFDM radar sensor according to one of the preceding claims, wherein, in the operating mode mentioned, a respective OFDM symbol (80) of a signal in a respective transmitting channel (10) of the plurality of transmitting channels has unused OFDM subcarriers,
wherein the OFDM subcarriers (90) that are used in a respective OFDM symbol (80) of a signal in a respective one of the transmitting channels are arranged in the OFDM subcarrier spectrum in a manner interleaved with the used OFDM subcarriers (92; 94) of the simultaneously transmitted OFDM symbols (82, 84) of the signals in the respective other transmitting channels (10).

10. OFDM radar sensor according to one of the preceding claims, in which the digital/analogue conversion and/or the reading-out of a part of a signal waveform of a signal for digital/analogue conversion is controlled by means of a clock signal (23) which differs from a clock signal (17) which controls the calculation or provision of the respective signal waveform of a signal in a transmitting channel by the control and evaluation device (16, 34, 38, 40, 42) .

11. Method for operating an OFDM radar sensor having a plurality of transmitting channels (10) and at least one receiving channel (12), wherein the OFDM radar sensor has, at least for first transmitting channels (10.1) of the plurality of transmitting channels, a plurality of buffers (18; 20) for each first transmitting channel (10.1) for parts of a signal waveform of the signal to be transmitted in the transmitting channel (10.1), wherein the method comprises:
transmitting respective signals in the plurality of transmitting channels (10), wherein a signal in a respective transmitting channel (10) comprises a sequence of OFDM symbols (80), and wherein the signals in the plurality of transmitting channels (10) are transmitted at the same time, wherein the OFDM symbols (80) transmitted in a respective transmitting channel (10) each have OFDM subcarriers (90) which are orthogonal to the OFDM subcarriers (92; 94) of the OFDM symbols (82; 84) simultaneously transmitted in the other ones of the plurality of transmitting channels (10);
receiving a reception signal in the at least one receiving channel (12);
spectrally separating signal components of the reception signal, wherein OFDM subcarriers are divided among the signal components according to their division among the transmitting channels (10) in the OFDM symbols (80; 82; 84) simultaneously transmitted in the transmitting channels (10); and
evaluating the signal components,
wherein, at least for the first transmitting channels (10.1), the signal waveform of the signal to be transmitted, which comprises the relevant sequence of OFDM symbols (82), is progressively calculated in parts for each transmitting channel, wherein the plurality of buffers (18; 20) are used alternately to store a calculated part of the signal waveform and to read out a previously calculated and stored preceding part of the signal waveform which is subjected to digital/analogue conversion and is transmitted,
wherein a respective part of the signal waveform is calculated and is stored in one of the buffers (20), whereas a preceding part of the signal waveform is already read from another one of the buffers (18) and is subjected to digital/analogue conversion and is transmitted in the relevant transmitting channel (10.1).

## Revendications

1. Capteur radar OFDM comprenant plusieurs canaux d'émission (10) et comprenant au moins un canal de réception (12), comprenant un dispositif de commande et d'interprétation (16, 34, 38, 40, 42), lequel est conçu pour un mode de fonctionnement avec lequel les plusieurs canaux d'émission (10) émettent respectivement des signaux, un signal d'un canal d'émission (10) respectif comportant une séquence de symboles OFDM (80) et les signaux des plusieurs canaux d'émission (10) étant émis simultanément,
les symboles OFDM (80) émis sur un canal d'émission (10) respectif présentant respectivement des sous-porteuses OFDM (90), lesquelles sont orthogonales par rapport aux sous-porteuses OFDM (92, 94) des symboles OFDM (82, 84) émis simultanément sur les autres des plusieurs canaux d'émission (10),
une séparation spectrale des fractions de signal du signal de réception étant effectuée pour un signal de réception reçu par l'au moins un canal de réception (12), une répartition des sous-porteuses OFDM sur les fractions de signal conformément à leur répartition sur les canaux d'émission (10) étant effectuée dans les symboles OFDM (80, 82, 84) émis simultanément sur les canaux d'émission (10) et une interprétation des fractions de signal étant effectuée,
**caractérisé en ce que**
le capteur radar OFDM possède, au moins pour des premiers canaux d'émission (10.1) des plusieurs canaux d'émission, plusieurs mémoires intermédiaires (18 ; 20) pour chaque premier canal d'émission (10.1) pour des parties d'une forme de signal du signal à émettre du canal d'émission (10.1),
lors du mode de fonctionnement mentionné, au moins pour les premiers canaux d'émission (10.1), la forme de signal du signal à émettre, laquelle comporte la séquence concernée de symboles OFDM (82), étant calculée progressivement en parties pour chaque canal d'émission (10.1), les plusieurs mémoires intermédiaires (18 ; 20) étant utilisées à tour de rôle pour le stockage d'une partie calculée de la forme de signal et pour la lecture d'une partie précédente de la forme de signal précédemment calculée et stockée, laquelle est convertie de numérique en analogique puis émise,
une partie respective de la forme de signal étant calculée et étant stockée dans l'une des mémoires intermédiaires (20), pendant qu'une partie précédente de la forme de signal est déjà lue hors d'une autre des mémoires intermédiaires (18) et convertie de numérique en analogique puis émise sur le canal d'émission (10.1) concerné.

2. Capteur radar OFDM selon la revendication 1, le capteur radar OFDM possédant, pour chacun des plusieurs canaux d'émission (10), plusieurs mémoires intermédiaires (18 ; 20) par canal d'émission (10) pour des parties d'une forme de signal du signal à émettre du canal d'émission (10),
lors du mode de fonctionnement mentionné, pour chacun des plusieurs canaux d'émission (10), la forme de signal du signal à émettre, laquelle comporte la séquence concernée de symboles OFDM (80), étant calculée progressivement en parties, les plusieurs mémoires intermédiaires (18 ; 20) étant utilisées à tour de rôle pour le stockage d'une partie calculée de la forme de signal et pour la lecture d'une partie précédente de la forme de signal précédemment calculée et stockée, laquelle est convertie de numérique en analogique puis émise,
une partie respective de la forme de signal étant calculée sur la base de codes de phase, lesquels sont associés aux sous-porteuses OFDM respectives par un symbole OFDM (80) respectif de la séquence de symboles OFDM (80) du signal,
une partie respective de la forme de signal étant calculée et étant stockée dans l'une des mémoires intermédiaires (20), pendant qu'une partie précédente de la forme de signal est déjà lue hors d'une autre des mémoires intermédiaires (18) et convertie de numérique en analogique puis émise sur le canal d'émission (10) concerné.

3. Capteur radar OFDM selon la revendication 1, le dispositif de commande et d'interprétation (16, 34, 38, 40, 42) étant conçu pour, lors du mode de fonctionnement mentionné, pour les premiers canaux d'émission (10.1), calculer la partie respective de la forme de signal du signal à émettre du canal d'émission (10.1) à partir d'une partie correspondante d'une forme de signal d'un signal générique ou à partir d'une partie correspondante d'une forme de signal d'un signal à émettre d'un deuxième canal d'émission (10.2) d'au moins un deuxième canal d'émission (10.2) des plusieurs canaux d'émission (10) au moyen de la multiplication par une oscillation périodique ayant une fréquence qui correspond à un n-ième d'un écart entre sous-porteuses OFDM (Δf), n étant un nombre entier différent de zéro, et des n différents étant utilisés pour des premiers canaux d'émission (10.1) différents.

4. Capteur radar OFDM selon la revendication 3, le capteur radar OFDM possédant une mémoire (60) dans laquelle est mémorisée au moins une forme de signal d'au moins un symbole OFDM (80),
lors du mode de fonctionnement mentionné, pour l'au moins un deuxième canal d'émission (10.2) des plusieurs canaux d'émission (10), la forme de signal du signal d'un deuxième canal d'émission (10.2) respectif comportant plusieurs parties qui comportent respectivement au moins un symbole OFDM (80), et
les parties étant mises à disposition et converties de numérique en analogique puis étant émises sur le deuxième canal d'émission (10.2) concerné,
pour la mise à disposition d'une partie respective desdites parties de la forme de signal du signal du deuxième canal d'émission (10.2) concerné, un accès étant effectué à l'au moins une forme de signal mémorisée dans la mémoire (60),
pour les premiers canaux d'émission (10.1), la partie respective de la forme de signal du signal à émettre du canal d'émission (10.1) respectif étant calculée à partir d'une partie correspondante de la forme de signal d'un signal à émettre d'un deuxième canal d'émission (10.2) d'au moins un deuxième canal d'émission (10.2) des plusieurs canaux d'émission (10) au moyen de la multiplication par une oscillation périodique ayant une fréquence qui correspond à un n-ième d'un écart entre sous-porteuses OFDM (Δf), n étant un nombre entier différent de zéro, et des n différents étant utilisés pour des premiers canaux d'émission (10.1) différents.

5. Capteur radar OFDM selon la revendication 3, le capteur radar OFDM, pour au moins un deuxième canal d'émission (10.2) des plusieurs canaux d'émission (10), possédant plusieurs mémoires intermédiaires (18 ; 20) pour chaque deuxième canal d'émission (10.2) pour des parties d'une forme de signal du signal à émettre du canal d'émission (10.2),
lors du mode de fonctionnement mentionné, pour l'au moins un deuxième canal d'émission (10.2), pour chaque canal d'émission, la forme de signal du signal à émettre, laquelle comporte la séquence concernée de symboles OFDM (80), étant calculée progressivement en parties, les plusieurs mémoires intermédiaires (18 ; 20) étant utilisées à tour de rôle pour le stockage d'une partie calculée de la forme de signal et pour la lecture d'une partie précédente de la forme de signal précédemment calculée et stockée, laquelle est convertie de numérique en analogique puis émise,
une partie respective de la forme de signal étant calculée et stockée dans l'une des mémoires intermédiaires (20), pendant qu'une partie précédente de la forme de signal est déjà lue hors d'une autre des mémoires intermédiaires (18) et convertie de numérique en analogique puis émise sur le canal d'émission (10.2) concerné,
une partie respective de la forme de signal étant calculée sur la base de codes de phase, lesquels sont associés aux sous-porteuses OFDM (90) respectives par un symbole OFDM (80) respectif de la séquence de symboles OFDM (80) du signal,
pour les premiers canaux d'émission (10.1), la partie respective de la forme de signal du signal à émettre du canal d'émission respectif étant calculée à partir d'une partie correspondante de la forme de signal d'un signal à émettre d'un deuxième canal d'émission (10.2) d'au moins un deuxième canal d'émission des plusieurs canaux d'émission au moyen de la multiplication par une oscillation périodique ayant une fréquence qui correspond à un n-ième d'un écart entre sous-porteuses OFDM (Δf), n étant un nombre entier différent de zéro, et des n différents étant utilisés pour des premiers canaux d'émission (10.1) différents.

6. Capteur radar OFDM selon l'une des revendications 3 à 5, dans lequel le dispositif de commande et d'interprétation (16, 34, 38, 40, 42) est conçu pour, lors du mode de fonctionnement mentionné, déterminer les valeurs d'amplitude (A) de l'oscillation périodique respective par lecture des valeurs d'amplitude (A) depuis un tableau conformément à un index de tableau (I), lequel est déterminé en fonction d'un angle de phase (s), qui est incrémenté pour des valeurs d'amplitude (A) chronologiquement successives de l'oscillation, des incréments de phase (Δs) différents étant utilisés pour des oscillations ayant des fréquences différentes pour la lecture des valeurs d'amplitude (A) depuis le même tableau.

7. Capteur radar OFDM selon la revendication 6, dans lequel le tableau comporte seulement un quart d'une période d'une oscillation périodique, un accès au tableau dans l'ordre inverse de l'index de tableau (I) étant effectué pour la lecture des valeurs d'amplitude (A) d'une deuxième moitié d'une première ou deuxième demi-période de l'oscillation périodique, et un signe de la valeur d'amplitude (A) lue étant inversé lors de la lecture des valeurs d'amplitude (A) d'une deuxième demi-période de l'oscillation périodique.

8. Capteur radar OFDM selon l'une des revendications 3 à 7, dans lequel la multiplication est calculée en tant que multiplication avec une oscillation harmonique de valeur complexe.

9. Capteur radar OFDM selon l'une des revendications précédentes, un symbole OFDM (80) respectif d'un signal d'un canal d'émission (10) respectif des plusieurs canaux d'émission possédant, lors du mode de fonctionnement mentionné, des sous-porteuses OFDM non occupées,
les sous-porteuses OFDM (90) occupées dans un symbole OFDM (80) respectif d'un signal d'un canal d'émission respectif des canaux d'émission étant disposées de manière imbriquée dans le spectre des sous-porteuses OFDM avec les sous-porteuses OFDM occupées (92 ; 94) des symboles OFDM (82 ; 84) émis simultanément des signaux des autres canaux d'émission (10) respectifs.

10. Capteur radar OFDM selon l'une des revendications précédentes, dans lequel la conversion de numérique en analogique et/ou la lecture d'une partie d'une forme de signal d'un signal en vue de la conversion de numérique en analogique sont commandées par un signal d'horloge (23), lequel se différentie d'un signal d'horloge (17) qui commande le calcul ou la mise à disposition de la forme de signal respective d'un signal d'un canal d'émission par le dispositif de commande et d'interprétation (16, 34, 38, 40, 42).

11. Procédé pour faire fonctionner un capteur radar OFDM comprenant plusieurs canaux d'émission (10) et comprenant au moins un canal de réception (12), le capteur radar OFDM possédant, au moins pour des premiers canaux d'émission (10.1) des plusieurs canaux d'émission, plusieurs mémoires intermédiaires (18 ; 20) pour chaque premier canal d'émission (10.1) pour des parties d'une forme de signal du signal à émettre du canal d'émission (10.1), le procédé comprenant :
l'émission de signaux respectifs sur les plusieurs canaux d'émission (10), un signal d'un canal d'émission (10) respectif comportant une séquence de symboles OFDM (80) et les signaux des plusieurs canaux d'émission (10) étant émis simultanément, les symboles OFDM (80) émis sur un canal d'émission (10) respectif présentant respectivement des sous-porteuses OFDM (90), lesquelles sont orthogonales par rapport aux sous-porteuses OFDM (92 ; 94) des symboles OFDM (82 ; 84) émis simultanément sur les autres des plusieurs canaux d'émission (10) ;
la réception d'un signal de réception sur l'au moins un canal de réception (12) ;
la séparation spectrale des fractions de signal du signal de réception, une répartition des sous-porteuses OFDM sur les fractions de signal conformément à leur répartition sur les canaux d'émission (10) étant effectuée dans les symboles OFDM (80 ; 82 ; 84) émis simultanément sur les canaux d'émission (10) ; et
l'interprétation des fractions de signal,
au moins pour les premiers canaux d'émission (10.1), la forme de signal du signal à émettre, laquelle comporte la séquence concernée de symboles OFDM (82), étant calculée progressivement en parties pour chaque canal d'émission, les plusieurs mémoires intermédiaires (18 ; 20) étant utilisées à tour de rôle pour le stockage d'une partie calculée de la forme de signal et pour la lecture d'une partie précédente de la forme de signal précédemment calculée et stockée, laquelle est convertie de numérique en analogique puis émise,
une partie respective de la forme de signal étant calculée et étant stockée dans l'une des mémoires intermédiaires (20), pendant qu'une partie précédente de la forme de signal est déjà lue hors d'une autre des mémoires intermédiaires (18) et convertie de numérique en analogique puis émise sur le canal d'émission (10.1) concerné.
